# FASCICULE DE BREVET EUROPEEN

(11) **EP 1 690 708 B1**
(45) Date de publication et mention de la délivrance du brevet: **25.03.2009**
(21) Numéro de dépôt: 06290202.8
(22) Date de dépôt: 06.02.2006
(51) Int. Cl.: B60H 1/34

(54) **Aérateur pour véhicule comprenant des ailettes portées par un corps cylindrique rotatif**
Luftaustritt für Kraftfahrzeuge mit an einem drehbaren zylinderförmigen Körper angebrachten Luftleitschaufeln
Motor vehicle air vent with vanes installed in a rotary cylindrical body

(30) Priorité: 11.02.2005 FR 0501382
(43) Date de publication de la demande: 16.08.2006
(73) Titulaire: Key Plastics International, 61130 Bellême (FR)
(72) Inventeur: Avanzini, Philippe, 61130 Belleme (FR); Davril, Jean-Louis, 61400 Mortagne au Perche (FR)
(74) Mandataire: Chameroy, Claude

(56) Documents cités:
- EP-A- 1 344 668
- DE-A1- 3 044 289
- GB-A- 2 040 438

## Description

La présente invention concerne un aérateur destiné à introduire un flux d'air dans l'habitacle d'un véhicule, notamment d'une automobile, comprenant un boîtier comportant une ouverture axiale reliée à une arrivée d'air conditionné et une ouverture latérale débouchant dans l'habitacle du véhicule, et des moyens de réglage pour modifier la direction du flux d'air sortant de l'ouverture latérale du boîtier.

Les aérateurs des véhicules automobiles actuels comportent généralement de nombreuses pièces constitutives, ce qui les rend difficiles et coûteux à fabriquer, un tel dispositif est connu du document DE 3044289 A1.

Leurs moyens de réglage ont en outre une structure élémentaire ne permettant pas de diriger dans une direction prédéterminée précise le flux d'air pénétrant dans l'habitacle des véhicules.

La présente invention se propose de remédier à ces inconvénients et, pour ce faire, elle a pour objet un aérateur ayant la structure présentée au premier paragraphe ci-dessus et qui est caractérisé en ce que les moyens de réglage comprennent un corps cylindrique monté rotatif axialement dans le boîtier et dont la paroi latérale est définie par des ailettes parallèles à son axe longitudinal, ces ailettes étant disposées symétriquement par rapport à un plan diamétral prédéterminé du corps cylindrique et présentant par rapport à ce plan des inclinaisons variant progressivement.

Cet aérateur a une structure particulièrement simple puisque les ailettes sont solidaires du corps cylindrique et constituent donc une pièce unique avec celui-ci.

Il permet en outre de régler avec précision la direction du flux d'air pénétrant dans l'habitacle du véhicule, ce réglage dépendant de l'angle de rotation du corps cylindrique.

Par ailleurs, comme les ailettes présentent les unes par rapport aux autres des inclinaisons différentes, le débit du flux d'air incident peut dans une certaine mesure être réglé en fonction de l'angle de rotation du corps cylindrique.

De préférence, le corps cylindrique comporte deux ailettes extrêmes dont les plans médians longitudinaux forment des angles de respectivement 0 et 90° avec le plan diamétral prédéterminé.

Le débit du flux d'air admis dans l'habitacle du véhicule peut ainsi être maximum lorsque l'ailette extrême parallèle au plan diamétral prédéterminé est devant l'ouverture latérale du boîtier et minimum lorsque l'autre ailette extrême est devant cette ouverture.

Selon un mode de réalisation particulier du corps cylindrique, les côtés longitudinaux des ailettes délimitent des cercles interne et externe pratiquement tangents au niveau de l'ailette extrême dont le plan longitudinal médian forme un angle de 90° avec le plan diamétral prédéterminé.

L'émission du flux d'air dans l'habitacle du véhicule peut ainsi être complètement interrompue lorsque l'ailette extrême formant un angle de 90° avec le plan diamétral prédéterminé et les ailettes adjacentes à cette ailette extrême sont devant l'ouverture latérale du boîtier.

Selon le mode de réalisation particulier ci-dessus, les plans médians longitudinaux des ailettes situées de part et d'autre du plan diamétral prédéterminé forment avec ce dernier des angles différents, la valeur d'un angle (α) pour une ailette prédéterminée étant égale à la moitié de celle de l'angle (β) formé, pour cette aile prédéterminée, par deux rayons prédéterminés du cercle externe, à savoir le rayon situé dans le plan médian longitudinal de l'ailette extrême qui forme un angle nul avec le plan diamétral prédéterminé et le rayon coupant l'axe longitudinal de ladite ailette prédéterminée.

Par ailleurs, le corps cylindrique peut avantageusement porter un organe de commande faisant saillie dans l'habitacle, à proximité de l'ouverture axiale du boîtier.

Un passager situé à proximité de l'aérateur peut ainsi régler la direction et le débit du flux d'air pénétrant dans l'habitacle en actionnant l'organe de commande.

Cet organe peut être un disque solidaire de l'une des extrémités du corps cylindrique et s'étendant coaxialement avec ce dernier.

Il suffit donc dans ce cas de faire tourner le disque pour régler la direction du flux d'air.

Afin de faciliter la mise en rotation du corps cylindrique, la périphérie du disque peut être crantée.

Par ailleurs, pour limiter le poids de l'aérateur et permettre la fabrication de celui-ci en grande série dans des conditions économiques compétitives, le boîtier et le corps cylindrique sont de préférence réalisés en matière plastique.

Un mode d'exécution de la présente invention sera décrit ci-après à titre d'exemple nullement limitatif en référence aux dessins annexés dans lesquels :
- la figure 1 est une vue de face schématique montrant un aérateur conforme à l'invention, cet aérateur étant installé derrière un cache fixé sur le tableau de bord d'un véhicule automobile ;
- la figure 2 est une vue en perspective schématique de l'aérateur ;
- la figure 3 est une vue en perspective éclatée de l'aérateur visible sur la figure 2 ;
- la figure 4 est une vue en coupe selon la ligne IV-IV de la figure 1 ; et
- les figures 5 à 7 sont des vues analogues à la figure 4 mais montrant le corps cylindrique dans des positions différentes.

L'aérateur représenté sur les dessins a été conçu pour être installé sur le tableau de bord d'une automobile.

Il va de soi cependant que l'on ne sortirait pas du cadre de la présente invention si cet aérateur était installé sur le panneau intérieur d'une portière ou sur tout autre support situé dans l'habitacle de l'automobile. Il pourrait également être utilisé pour diffuser de l'air dans l'habitacle d'un véhicule de transport tel qu'un avion ou un wagon.

L'aérateur visible sur les dessins comprend un boîtier 1 situé derrière un cache 2 fixé d'une manière connue en soi dans un évidement ménagé dans le tableau de bord 3.

Le boîtier 1 comporte une paroi cylindrique 4 pourvue d'une ouverture latérale 5, une première paroi transversale 6 pourvue d'une ouverture axiale 7 reliée par un conduit approprié 8 à l'installation de climatisation non représentée de l'automobile, et une seconde paroi transversale 9 pourvue d'une ouverture axiale 10 dont le rôle sera précisé ci-après.

Les parois transversales 6 et 9 sont parallèles et solidaires de la paroi cylindrique 4 qui s'étend entre elles.

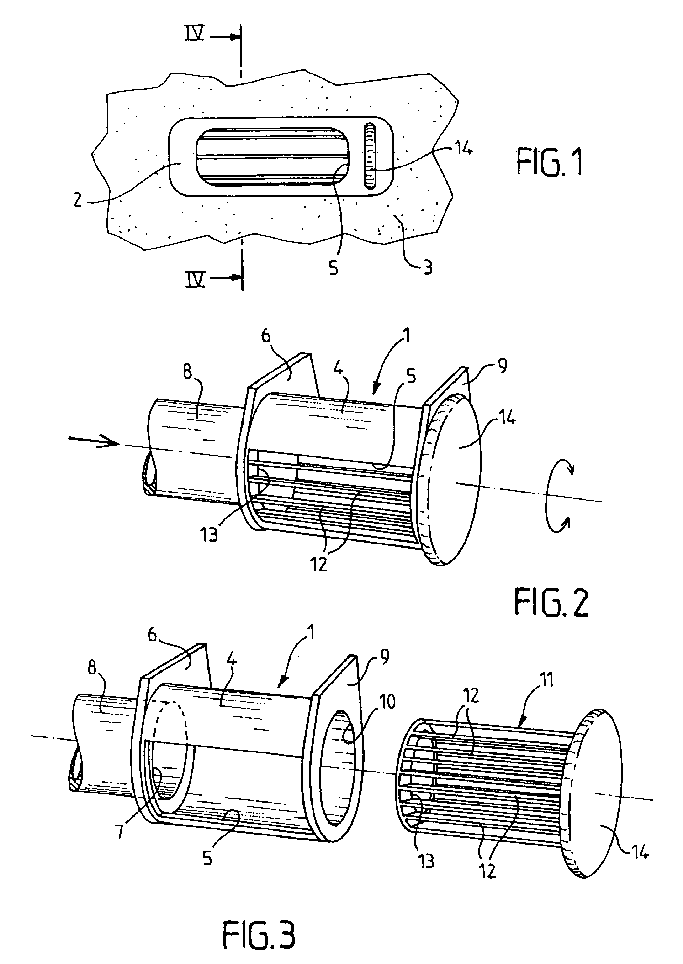

Comme le montre la figure 1, le cache 2 comporte un orifice situé devant l'ouverture latérale 5 et ayant des dimensions légèrement inférieures à celles de cette ouverture.

L'aérateur comprend également un corps cylindrique 11 monté rotatif axialement dans le boîtier 1, l'introduction du corps 11 dans le boîtier 1 étant assurée à travers l'ouverture axiale 10 de la paroi transversales 9 de ce dernier.

Le corps cylindrique 11 comporte une paroi latérale définie par des ailettes 12 s'étendant parallèlement à son axe longitidunal.

Il comporte également deux parois transversales, l'une étant pourvue d'un orifice 13 situé devant l'ouverture axiale 7 du boîtier 1, et l'autre étant constitué par un disque 14 dont le diamètre est supérieur à celui du corps 11.

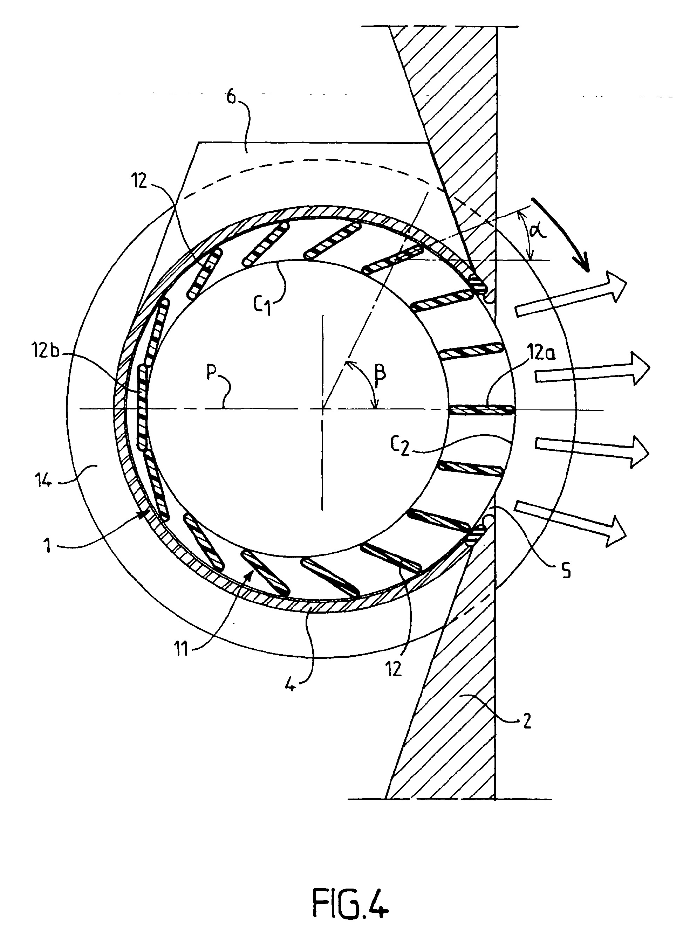

En se référant aux figures 4 à 7, on remarquera que les ailettes 12 sont disposées symétriquement par rapport à un plan diamétral P prédéterminé du corps 11 et présentent par rapport à ce plan des inclinaisons variant progressivement.

On remarquera également la présence de deux ailettes extrêmes 12a, 12b dont les plans médians longitudinaux forment des angles de respectivement 0 et 90° avec le plan diamétral P.

Dans le mode de réalisation représenté, les côtés longitudinaux des ailettes 12 délimitent un cercle interne C1 et un cercle externe C2, ces cercles étant pratiquement tangents au niveau de l'ailette extrême 12b.

Comme le montre la figure 4, les plans médians longitudinaux des ailettes 12 situées de part et d'autre du plan diamétral P forment avec ce dernier des angles α différents, la valeur d'un angle α pour une ailette prédéterminée étant égale à la moitié de celle de l'angle *β* formé, pour cette ailette prédéterminée, par deux rayons prédéterminés du cercle C2, à savoir le rayon situé dans le plan médian longitudinal de l'ailette extrême 12a et le rayon coupant l'axe longitudinal de ladite ailette prédéterminée.

On notera ici que le disque 14 constituant l'une des deux parois transversales du corps 11 fait saillie dans une lumière ménagée dans le cache 2, à proximité de l'orifice de celui-ci qui est situé devant l'ouverture latérale 5 du boîtier 1.

La périphérie du disque 14 est crantée afin qu'un passager du véhicule puisse plus facilement faire tourner le corps cylindrique 11 à l'aide d'un doigt.

Grâce aux crans ménagés sur la périphérie du disque, l'adhérence du doigt utilisé pour faire tourner le corps 11 est en effet augmentée de façon sensible.

On précisera enfin que le boîtier 1 et le corps cylindrique 11 sont réalisés en matière plastique et que des joints d'étanchéité sont prévus pour éviter des fuites d'air entre le boîtier 1 et le corps cylindrique 11.

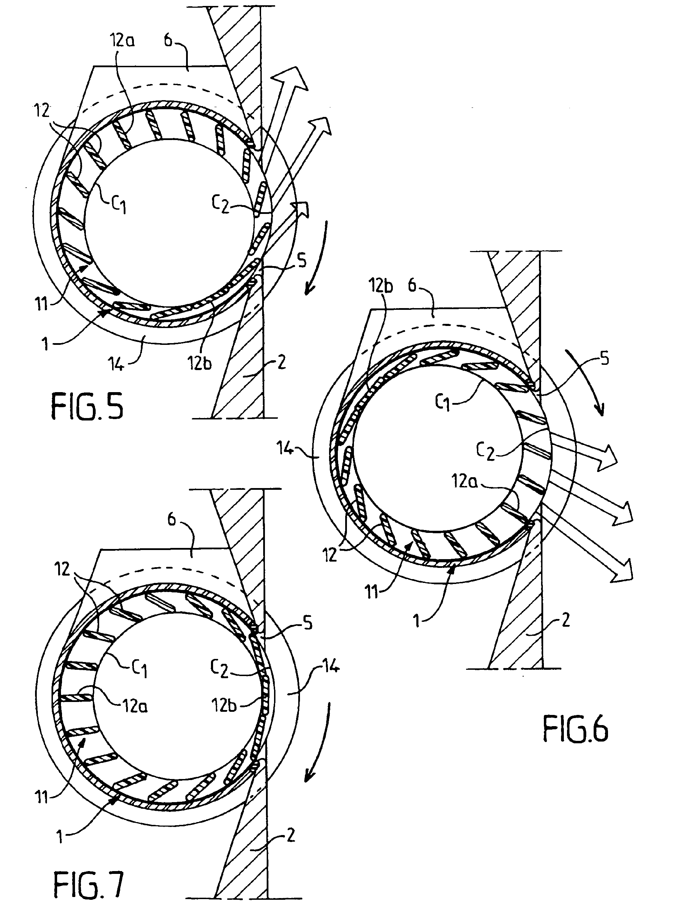

L'aérateur qui vient d'être décrit est installé horizontalement sur le tableau du bord 3 et permet de diriger le flux d'air entrant dans l'habitacle du véhicule dans de très nombreuses directions dirigées vers le haut, comme représenté sur la figure 5 et de très nombreuses directions dirigées vers le bas, comme représenté sur la figure 6.

En faisant tourner d'un angle prédéterminé, dans un sens ou dans l'autre, le corps cylindrique 11 dans le boîtier 1, un passager du véhicule peut donc diriger le flux d'air vers le haut ou vers le bas dans une direction particulière précise.

Quand ce passager fait tourner le corps cylindrique 11 de façon à amener l'ailette extrême 12a dans la partie centrale de l'ouverture latérale 5 du boîtier 1, comme représenté sur la figure 4, le flux d'air pénètre pratiquement horizontalement dans l'habitacle avec un débit important.

En revanche, quand il fait tourner le corps cylindrique 11 de façon à amener l'ailette extrême 12b et les ailettes adjacentes à celle-ci dans la partie centrale de l'ouverture latérale 5 du boîtier, comme représenté sur la figure 7, le flux d'air ne peut pénétrer dans l'habitacle, l'ailette 12b et les deux ailettes adjacentes à celle-ci obturant complétement l'ouverture 5.

L'aérateur qui vient d'être décrit pourrait bien entendu être installé verticalement sur le tableau de bord.

Dans ce cas, le flux d'air pourrait entrer dans l'habitacle dans de très nombreuses directions dirigées vers la droite ou vers la gauche.

Par ailleurs, le disque 14 prévu pour faire tourner manuellement le corps cylindrique 11 dans le boîtier 1 pourrait être remplacé par un organe de commande motorisé.

## Revendications

1. Aérateur destiné à introduire un flux d'air dans l'habitacle d'un véhicule, notamment d'une automobile, comprenant un boîtier (1) comportant une ouverture axiale (7) reliée à une arrivée d'air conditionné et une ouverture latérale (5) débouchant dans l'habitacle du véhicule, et des moyens de réglage (11) pour modifier la direction d'introduction du flux d'air dans l'habitacle, les moyens de réglage comprenant un corps cylindrique (11) monté rotatif sur son axe longitudinal dans le boîtier (1) et comportant une paroi latérale définie par des ailettes (12) qui s'étendent parallèlement audit axe longitudinal et présentent des inclinaisons variant progressivement, **caractérisé en ce que** les ailettes (12) étant disposées symétriquement par rapport à un plan diamétral prédéterminé (P) du corps cylindrique (11), ce plan coupant deux ailettes extrêmes (12a, 12b) en formant avec celles-ci des angles de respectivement 0 et 90°, les côtés longitudinaux des ailettes (12) délimitent des cercles interne (C1) et externe (C2) pratiquement tangents au niveau de l'ailette extrême (12b) dont le plan longitudinal médian forme un angle de 90° avec le plan diamétral prédéterminé (P).

2. Aérateur selon la revendication 1, **caractérisé en ce que** les plans médians longitudinaux des ailettes (12) situées de part et d'autre du plan diamétral prédéterminé (P) forment avec ce dernier des angles (α) différents, la valeur d'un angle (α) pour une ailette prédéterminée étant égale à la moitié de celle de l'angle (β) formé, pour cette ailée prédéterminée, par deux rayons prédéterminés du cercle externe (C2), à savoir le rayon situé dans le plan médian longitudinal de l'ailette extrême (12a) qui forme un angle nul avec le plan diamétral prédéterminé (P) et le rayon coupant l'axe longitudinal de ladite ailette prédéterminée.

3. Aérateur selon la revendication 1 ou 2, **caractérisé en ce que** le corps cylindrique (11) porte un organe de commande (14) faisant saillie dans l'habitacle, à proximité de l'ouverture axiale (5) du boîtier (1).

4. Aérateur selon la revendication 3, **caractérisé en ce que** l'organe de commande est un disque (14) solidaire de l'une des extrémités du corps cylindrique (11) et s'étendant coaxialement avec ce dernier.

5. Aérateur selon la revendication 4, **caractérisé en ce que** la périphérie du disque (14) est crantée.

6. Aérateur selon l'une quelconque des revendications précédentes, **caractérisé en ce que** le boîtier (1) et le corps cylindrique (11) sont réalisés en matière plastique.

## Claims

1. An air vent intended to introduce an airflow into the passenger compartment of a vehicle, in particular a car, comprising a housing (1) including an axial opening (7) connected to an air-conditioning inlet and a lateral opening (5) opening into the passenger compartment of the vehicle, and control means (11) for modifying the direction of the introduction of the airflow into the passenger compartment, the control means comprising a cylindrical body (11) mounted to rotate about its longitudinal axis in the housing (1) and including a lateral wall defined by vanes (12) of gradually varying inclination extending parallel to the said longitudinal axis, **characterised in that** the vanes (12) are disposed symmetrically in relation to a predetermined diametral plane (P) of the cylindrical body (11), this plane cutting through two end vanes (12a, 12b) and forming angles of 0° and 90° respectively therewith, the longitudinal sides of the vanes (12) delimiting internal (C1) and external (C2) circles virtually tangential at the end vane (12b), the median longitudinal plane of which forms an angle of 90° with the predetermined diametral plane (P).

2. An air vent according to claim 1, **characterised in that** the median longitudinal planes of the vanes (12) situated on either side of the predetermined diametral plane (P) form different angles (α) therewith, the value of an angle (α) for one predetermined vane being equal to half that of the angle (β) formed for this predetermined vane by two predetermined radii of the external circle (C2), namely the radius situated in the median longitudinal plane of the end vane (12a) forming a zero angle with the predetermined diametral plane (P) and the radius intersecting the longitudinal axis of the said predetermined vane.

3. An air vent according to claim 1 or claim 2, **characterised in that** the cylindrical body (11) is provided with a control element (14) projecting into the passenger compartment in the vicinity of the axial opening (5) of the housing (1),

4. An air vent according to claim 3, **characterised in that** the control element is a disc (14) integral with one of the ends of the cylindrical body (11) and extending coaxially with the latter.

5. An air vent according to claim 4, **characterised in that** the periphery of the disc (14) is notched.

6. An air vent according to any one of the preceding claims, **characterised in that** the housing (1) and the cylindrical body (11) are made of plastic.

## Patentansprüche

1. Luftdüse zum Einlass eines Luftstromes in den Innenraum eines Fahrzeuges, insbesondere eines Kraftfahrzeuges, bestehend aus einem Gehäuse (1) mit einer an eine Zufuhr für aufbereitete Luft angeschlossenen axialen Öffnung (7) und mit einer in den Innenraum des Fahrzeuges mündenden Seitenöffnung (5), und aus Einstellungsmitteln (11) zur Änderung der Einlassrichtung des Luftstroms in den Innenraum, wobei die Einstellungsmittel einen Zylinderkörper (11) umfassen, der im Gehäuse (1) um seine Längsachse drehgelagert ist, und der eine von Flügeln (12) gebildete Seitenwand aufweist, welche parallel zur Längsachse verlaufen und sich stufenweise ändernde Neigungen aufweisen,
**dadurch gekennzeichnet, dass** die Flügel (12) bezüglich einer vorbestimmten Diametralebene (P) des Zylinderkörpers (11) symmetrisch angeordnet sind, wobei diese Ebene zwei endseitige Flügel (12a, 12b) schneidet und dabei mit letzteren einen Winkel von 0 bzw. 90° bildet, und wobei die Längsseiten der Flügel (12) einen inneren Kreis (C1) und einen äußeren Kreis (C2) abgrenzen, die an jenem endseitigen Flügel (12b) im wesentlichen aneinander berühren, dessen Längsmittelachse einen Winkel von 90° mit der vorbestimmten Diametralebene (P) bildet.

2. Luftdüse nach Anspruch 1, **dadurch gekennzeichnet, dass** die Längsmittelebenen der beidseits der vorbestimmten Diametralebene (P) liegenden Flügel (12) mit dieser Ebene unterschiedliche Winkel (α) bilden, wobei der Wert eines Winkels (α) für einen vorbestimmten Flügel zweimal so klein wie der Wert des Winkels (β) ist, der für diesen vorbestimmten Flügel von zwei vorbestimmten Radien des äußeren Kreises (C2) gebildet ist, nämlich von dem Radius, der in der Längsmittelebene jenes endseitigen Flügels (12a) liegt, der mit der vorbestimmten Diametralebene (P) einen Nullwinkel bildet, und von dem Radius, der die Längsachse des vorbestimmten Flügels schneidet.

3. Luftdüse nach Anspruch 1 oder 2, **dadurch gekennzeichnet, dass** der Zylinderkörper (11) ein in der Nähe der axialen Öffnung (5) des Gehäuses (1) in den Innenraum vorspringendes Steuerglied (14) trägt.

4. Luftdüse nach Anspruch 3, **dadurch gekennzeichnet, dass** das Steuerglied eine mit dem einen Ende des Zylinderkörpers (11) einstückig verbundene, mit diesem koaxial angeordnete Kreisscheibe (14) ist.

5. Luftdüse nach Anspruch 4, **dadurch gekennzeichnet, dass** der Umfang der Kreisscheibe (14) mit Kerben versehen ist.

6. Luftdüse nach einem der vorhergehenden Ansprüche, **dadurch gekennzeichnet, dass** das Gehäuse (1) und der Zylinderkörper (11) aus Kunststoff hergestellt sind.
